# EUROPÄISCHE PATENTSCHRIFT

(11) **EP 3 559 506 B1**
(45) Veröffentlichungstag und Bekanntmachung des Hinweises auf die Patenterteilung: **10.03.2021**
(21) Anmeldenummer: 17777163.1
(22) Anmeldetag: 18.09.2017
(51) Int. Cl.: F16H 3/00, F16H 3/093

(54) **DOPPELKUPPLUNGSGETRIEBE**
DOUBLE CLUTCH TRANSMISSION
TRANSMISSION À DOUBLE EMBRAYAGE

(30) Priorität: 21.12.2016 DE 102016015265
(43) Veröffentlichungstag der Anmeldung: 30.10.2019
(73) Patentinhaber: Daimler AG, 70372 Stuttgart (DE)
(72) Erfinder: HAHN, Peter, 70374 Stuttgart (DE); SPERRFECHTER, Stefan, 73072 Donzdorf (DE); HAERTER, Tobias, 70174 Stuttgart (DE); BOU ROMANO, Josep Maria, 71384 Weinstadt (DE); SCHWEITZER, Juergen, 70794 Filderstadt (DE); ROMANIAK, Jakub, 70186 Stuttgart (DE)
(74) Vertreter: JENSEN & SON
(86) Internationale Anmeldenummer: PCT/EP2017/001100
(87) Internationale Veröffentlichungsnummer: WO 2018/114018

(56) Entgegenhaltungen:
- EP-A1- 1 714 816

## Beschreibung

Die Erfindung betrifft ein Doppelkupplungsgetriebe für einen Antriebsstrang eines Kraftfahrzeugs.

Es sind bereits Doppelkupplungsgetriebe zur Schaltung von zumindest sechs sequentiell schaltbaren Getriebegängen, mit einer ersten Eingangswelle, die zur Anbindung an eine erste Lastschaltkupplung vorgesehen ist, mit einer zweiten Eingangswelle, die zur Anbindung an eine zweite Lastschaltkupplung vorgesehen ist, mit einer ersten Vorgelegewelle, mit einer zweiten Vorgelegewelle, mit dritten Vorgelegewelle, mit zumindest sechs Schalteinheiten und mit zumindest vier Zahnradebenen vorgeschlagen worden.

Aus der US 7 077 025 B2 ist bereits ein Doppelkupplungsgetriebe zur Schaltung von zumindest sechs sequentiell schaltbaren Getriebegängen, mit einer ersten Eingangswelle, mit einer zweiten Eingangswelle, mit einer ersten Vorgelegewelle, mit einer zweiten Vorgelegewelle, mit einer dritten Vorgelegewelle, mit zumindest sechs Schalteinheiten und mit zumindest einer ersten, einer zweiten, einer dritten und einer vierten Zahnradebene bekannt, wobei die zumindest sechs Schalteinheiten zwischen genau zwei direkt benachbarten Zahnradebenen angeordnet sind.

Ferner offenbart die gattungsgemäße EP 1 714 816 A1 ein Doppelkupplungsgetriebe mit drei Vorgelegewellen und sechs Schalteinheiten, wobei alle sechs Schalteinheiten zwischen zwei bestimmten Zahnradebenen des Doppelkupplungsgetriebes angeordnet sind.

Der Erfindung liegt insbesondere die Aufgabe zugrunde, ein insbesondere in eine Axialrichtung kompaktes Doppelkupplungsgetriebe mit einer hohen Anzahl an komfortabel schaltbaren Getriebegängen bereitzustellen. Diese Aufgabe wird gemäß der Erfindung durch ein Doppelkupplungsgetriebe mit den Merkmalen des Anspruchs 1 gelöst. Weitere Ausgestaltungen ergeben sich aus den Unteransprüchen.

Die Erfindung geht aus vom einem Doppelkupplungsgetriebe zur Schaltung von zumindest sechs sequentiell schaltbaren Getriebegängen, mit einer ersten Eingangswelle, die zur Anbindung an eine erste Lastschaltkupplung vorgesehen ist, mit einer zweiten Eingangswelle, die zur Anbindung an eine zweite Lastschaltkupplung vorgesehen ist, mit einer ersten Vorgelegewelle, mit einer zweiten Vorgelegewelle, mit dritten Vorgelegewelle, mit zumindest sechs Schalteinheiten und mit zumindest vier Zahnradebenen.

Dabei sind die zumindest sechs Schalteinheiten zwischen genau zwei benachbarten Zahnradebenen der zumindest vier Zahnradebenen angeordnet, wobei die zumindest sechs Schalteinheiten dazu vorgesehen sind, jeweils ein Losrad einer der zwei benachbarten Zahnradebenen drehfest mit einer der Vorgelegewellen zu verbinden.

Durch eine solche Ausgestaltung kann ein insbesondere in Axialrichtung kompaktes Doppelkupplungsgetriebe mit einer hohen Anzahl an zumindest konstruktiv schaltbaren Getriebegängen realisiert werden. Bei geringer Komplexität und geringem Bauraumbedarf kann eine besonders hohe Anzahl an lastschaltbaren Getriebegängen bereitgestellt werden.

Vorzugsweise ist die zweite Eingangswelle als eine Hohlwelle ausgebildet. Das Doppelkupplungsgetriebe ist vorzugsweise als ein Vorgelegewellengetriebe ausgebildet und umfasst eine Hauptrotationsachse und drei Nebenrotationsachsen. Unter einer "Hauptrotationsachse" soll dabei insbesondere eine durch die Eingangswellen definierte Rotationsachse verstanden werden. Unter einer "Nebenrotationsachse" soll insbesondere eine parallel zur Hauptrotationsachse versetzt angeordnete, durch eine Vorgelegewelle definierte Rotationsachse verstanden werden. Der Begriff "axial" ist insbesondere auf die Hauptrotationsachse bezogen, so dass der Ausdruck "axial" insbesondere eine Richtung bezeichnet, die parallel oder koaxial zu der Hauptrotationsachse verläuft. Vorzugsweise ist die erste Eingangswelle in den ungeraden Getriebegängen zur Übertragung eines Leistungsflusses zwischen einer Antriebsmaschine und zumindest einer der Vorgelegewellen vorgesehen. Vorzugsweise ist die zweite Eingangswelle in den geraden Getriebegängen zur Übertragung eines Leistungsflusses zwischen der Antriebsmaschine und zumindest einer der Vorgelegewellen vorgesehen.

Vorzugsweise sind die zumindest sechs Schalteinheiten in Verbindung mit den zumindest vier Zahnradebenen zumindest konstruktiv zur Schaltung von den wenigstens sechs unterschiedlichen Getriebegängen vorgesehen. Die wenigstens sechs Getriebegänge sind vorzugsweise zumindest sequentiell untereinander lastschaltbar. Die Getriebegänge bilden vorzugsweise Vorwärtsgetriebegänge aus. Unter "konstruktiv zur Schaltung von Getriebegängen vorgesehen" soll insbesondere verstanden werden, dass mechanisch ein entsprechender Getriebegang grundsätzlich bildbar ist, unabhängig davon, ob im Rahmen einer Schaltstrategie auf die Schaltung des Getriebegangs verzichtet wird oder nicht. Unter einer "Schalteinheit" soll insbesondere eine Einheit mit genau zwei Kopplungselementen verstanden werden, die dazu vorgesehen ist, zwei drehbar zueinander gelagerte Getriebeelemente, wie beispielsweise ein Losrad und eine Vorgelegewelle oder ein Losrad und eine Eingangswelle oder benachbarte Losräder unterschiedlicher Zahnradebenen, schaltbar drehfest miteinander zu verbinden. Zwei benachbarte, insbesondere axial benachbarte, Schalteinheiten können dabei grundsätzlich zu einer gemeinsamen Doppelschalteinheit zusammengefasst werden, indem beispielsweise ein gemeinsames Kopplungselement für beide Schalteinheiten vorgesehen wird. Jede der Schalteinheiten kann grundsätzlich als eine rein formschlüssige Schalteinheit, beispielsweise als Klauenkupplung, als form- und reibschlüssige Schalteinheit, beispielsweise in Form einer synchronisierten Klauenkupplung, oder als eine rein reibschlüssige Schalteinheit, beispielsweise in Form einer Lamellenkupplung, ausgeführt werden. Die erste Vorgelegewelle ist insbesondere zu den Eingangswellen parallel versetzt angeordnet. Die zweite Vorgelegewelle ist insbesondere zu den Eingangswellen parallel versetzt angeordnet. Die dritte Vorgelegewelle ist insbesondere zu den Eingangswellen parallel versetzt angeordnet.

Unter einer "Zahnradebene" soll insbesondere eine Getriebeebene verstanden werden, die zumindest eine Zahnradpaarung mit zumindest zwei miteinander kämmenden Zahnrädern aufweist, die in zumindest einem der Getriebegänge zur Übertragung eines Leistungsflusses vorgesehen sind. Vorzugsweise sind innerhalb einer Zahnradebene sämtliche Zahnräder jeweils paarweise miteinander wirkverbunden. Beispielsweise bilden mehrere Zahnradpaarungen eine einzige Zahnradebene aus, wenn die unterschiedlichen Zahnradpaarungen zumindest ein gemeinsames Festrad oder zumindest ein gemeinsames Losrad aufweisen. Insbesondere die Losräder, vorzugsweise die als gemeinsames Losrad ausgebildeten Losräder, können dabei eine Doppelverzahnung aufweisen oder mit einem Zwischenrad permanent drehfest verbunden sein. Vorteilhaft ist zumindest eine der Zahnradebenen als eine Doppelradebene ausgebildet. Unter einer "Doppelradebene" soll insbesondere eine Zahnradebene verstanden werden, die genau zwei Zahnradpaarungen mit einem gemeinsamen, koaxial zu den Eingangswellen angeordneten Zahnrad aufweist. Vorzugsweise ist zumindest eine Zahnradebene als Einfachradebene ausgebildet. Unter einer "Einfachradebene" soll insbesondere eine Zahnradebene verstanden werden, die genau eine Zahnradpaarung aufweist oder genau zwei Zahnradpaarungen mit einem gemeinsamen, koaxial zu einer der Vorgelegewelle angeordneten Zahnrad aufweist.

Unter einem "Losrad" soll insbesondere ein einzelnes, koaxial und drehbar zu einer der Vorgelegewellen oder zu den Eingangswellen angeordnetes Zahnrad einer Zahnradebene verstanden werden, das lediglich mit zumindest einem Kopplungselement wenigstens einer Schalteinheit permanent drehfest verbunden ist. Unter einem "Festrad" soll insbesondere ein einzelnes, koaxial und permanent drehfest zu einer der Vorgelegewellen oder einer der Eingangswellen angeordnetes Zahnrad einer Zahnradebene verstanden werden. Unter einem "gemeinsamen Zahnrad" soll insbesondere ein Los- oder Festrad einer Zahnradebene verstanden werden, das permanent kämmend mit zwei Zahnrädern dieser Zahnradebene verbunden ist. Unter "zwei benachbarten Zahnradebenen" sollen in diesem Zusammenhang insbesondere zwei Zahnradebenen verstanden werden, die in eine Axialrichtung betrachtet direkt hintereinander angeordnet sind. Insbesondere liegen zwischen zwei benachbarten Zahnradebenen, insbesondere in Axialrichtung betrachtet, keine weiteren Zahnradebenen. Unter "vorgesehen" soll insbesondere speziell ausgebildet, ausgelegt, ausgestattet und/oder angeordnet verstanden werden.

Das Doppelkupplungsgetriebe kann besonders kompakt ausgebildet werden, wenn ferner davon ausgegangen wird, dass von den zumindest vier Zahnradebenen eine erste Zahnradebene den Lastschaltkupplungen am nächsten liegt, eine zweite Zahnradebene zur ersten Zahnradebene benachbart und eine dritte Zahnradebene zur zweiten Zahnradebene benachbart ist, wobei die zumindest sechs Schalteinheiten zur Bildung der zumindest sechs sequentiell schaltbaren Getriebegänge ausschließlich zwischen der zweiten und dritten Zahnradebene angeordnet sind. Insbesondere ist eine vierte Zahnradebene der vier Zahnradebenen zur dritten Zahnradebene benachbart. Vorteilhaft ist von den vier Zahnradebenen die vierte Zahnradebene am weitesten von den Lastschaltkupplungen beabstandet.

Das Doppelkupplungsgetriebe kann besonders kompakt ausgebildet werden, wenn zumindest vier Schalteinheiten der zumindest sechs Schalteinheiten zu zumindest zwei Doppelschalteinheiten zusammengefasst ausgebildet sind. Besonders bevorzugt sind alle Schalteinheiten zu Doppelschalteinheiten zusammengefasst ausgebildet.

Zur Realisierung der hohen Anzahl an lastschaltbaren Getriebegängen wird ferner davon ausgegangen, dass die zweite Zahnradebene ein permanent drehfest mit der zweiten Eingangswelle verbundenes Festrad umfasst. Erfindungsgemäß umfasst die dritte Zahnradebene zumindest ein Festrad, das permanent drehfest mit der ersten Eingangswelle verbunden ist.

Weiterhin wird vorgeschlagen, dass eine erste Schalteinheit der Schalteinheiten dazu vorgesehen ist, ein erstes Losrad der Losräder zu einer Bildung eines Getriebegangs mit der ersten Vorgelegewelle drehfest zu verbinden. Dadurch kann eine Komplexität des Doppelkupplungsgetriebes vorteilhaft gering gehalten werden. Insbesondere ist die erste Schalteinheit zur Bildung des fünften Getriebegangs geschlossen.

Ferner wird vorgeschlagen, dass eine zweite Schalteinheit der Schalteinheiten dazu vorgesehen ist, ein zweites Losrad der Losräder zu einer Bildung eines Getriebegangs mit der ersten Vorgelegewelle drehfest zu verbinden. Insbesondere ist die zweite Schalteinheit zur Bildung des zweiten Getriebegangs geschlossen. Vorzugsweise sind die erste Schalteinheit und die zweite Schalteinheit als Doppelschalteinheit zusammengefasst ausgebildet.

Eine einfache Hybridisierung des Doppelkupplungsgetriebes kann erzielt werden, wenn das Doppelkupplungsgetriebe zumindest einen Elektromotor umfasst, der mit zumindest einem Kupplungselement der Lastschaltkupplungen permanent drehfest verbunden ist. Vorzugweise umfasst das Doppelkupplungsgetriebe eine dritte Lastschaltkupplung zur Anbindung einer Brennkraftmaschine mit dem Elektromotor.

Eine in der Figurenbeschreibung und/oder den Patentansprüchen verwendete Nummerierung der Zahnradebenen dient insbesondere zur Unterscheidung der Zahnradebenen. Die Nummerierung entspricht insbesondere nicht einer Anordnung, in der die Zahnradebenen entlang der Haupterstreckungsrichtung hintereinander angeordnet sind. Analog dient eine in der Figurenbeschreibung und/oder den Patentansprüchen verwendete Nummerierung der Schalteinheiten insbesondere zur Unterscheidung der Schalteinheiten. Die Nummerierung entspricht insbesondere nicht einer Anordnung, in der die Schalteinheiten entlang der Haupterstreckungsrichtung hintereinander angeordnet sind. Die Begriffe "erste", "zweite", usw. stellen damit insbesondere keine Reihenfolge, beispielsweise im Hinblick auf eine Anordnung, einen Kraftfluss, einen Antrieb oder dergleichen dar.

Grundsätzlich kann durch folgende Maßnahmen ein kinematisch äquivalentes Ausführungsbeispiel realisiert werden:
- Vertauschen einer Anordnung der Zahnradebenen und/oder der Schalteinheiten, insbesondere durch Vertauschen von Zahnradebenen, deren Fest- oder Losrad an gleicher Eingangswelle angeordnet ist und/oder denen eine Doppelschalteinheit zugeordnet ist;
- Vertauschen der Eingangswellen;
- Vertauschen von Teilgetrieben, wobei ein Teilgetriebe lediglich Zahnradebenen aufweist, deren Fest- oder Losräder an gleicher Eingangswelle angebunden sind;
- Auftrennen von Doppelradebenen in zwei Einfachradebenen;
- Änderung einer Anordnung eines Parksperrenrads;
- drehbare Anordnung eines Abtriebsrads auf einer Vorgelegewelle.

Weitere Vorteile ergeben sich aus der folgenden Figurenbeschreibung. In den Figuren sind drei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein Getriebeschema eines erfindungsgemäßen Doppelkupplungsgetriebes für ein Kraftfahrzeug,
- Fig. 2: ein Schaltschema des Doppelkupplungsgetriebes aus Figur 1,
- Fig. 3: ein Getriebeschema eines erfindungsgemäßen Doppelkupplungsgetriebes für ein Kraftfahrzeug in einem zweiten Ausführungsbeispiel,
- Fig. 4: ein Getriebeschema eines erfindungsgemäßen Doppelkupplungsgetriebes für ein Kraftfahrzeug in einem dritten Ausführungsbeispiel und
- Fig. 5: ein Schaltschema des Doppelkupplungsgetriebes aus Figur 4.

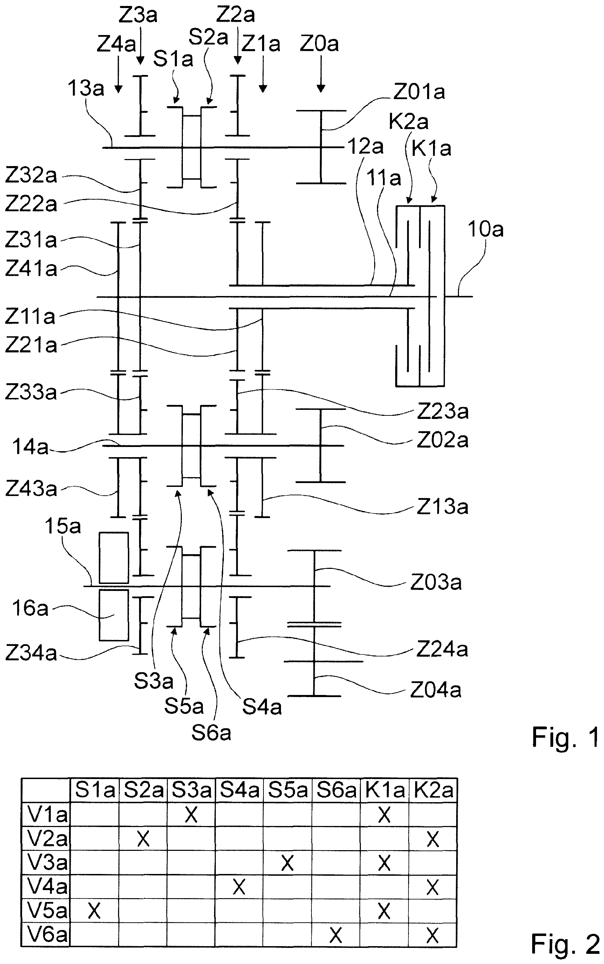

Figur 1 zeigt ein Getriebeschema eines Doppelkupplungsgetriebes eines Kraftfahrzeugs. Das Doppelkupplungsgetriebe ist für einen Frontantrieb vorgesehen. Das Doppelkupplungsgetriebe ist für einen Front-Quer-Einbau vorgesehen, d.h. für ein Kraftfahrzeug, das eine quer zur Fahrtrichtung angeordnete Antriebsmaschine und eine angetriebene Vorderachse aufweist.

Das Doppelkupplungsgetriebe umfasst eine Antriebswelle 10a, die zu einer drehfesten Anbindung an die Antriebsmaschine vorgesehen ist. Weiter umfasst das Doppelkupplungsgetriebe eine Eingangskupplung, die zwei im Kraftfluss parallel angeordnete Lastschaltkupplungen K1a, K2a umfasst. Zudem umfasst das Doppelkupplungsgetriebe ein nicht näher dargestelltes Abtriebszahnrad, das zur Anbindung an einen nicht näher dargestellten Achsantrieb für Antriebsräder des Kraftfahrzeugs vorgesehen ist. Das Doppelkupplungsgetriebe ist zumindest konstruktiv zur Schaltung von sechs unterschiedlich übersetzten Getriebegängen V1a, V2a, V3a, V4a, V5a, V6a vorgesehen. Die Getriebegänge V1a, V2a, V3a, V4a, V5a, V6a bilden Vorwärtsgetriebegänge aus.

Die sechs Getriebegänge V1a-V6a sind unter Last zumindest sequentiell schaltbar und/oder sequentiell lastschaltbar. Der erste Getriebegang V1a ist als der langsamste Getriebegang ausgebildet. Der sechste Getriebegang V6a ist als der schnellste Getriebegang ausgebildet.

Der erste, zweite, vierte und fünfte Getriebegang V1a, V2a, V4a, V5a ist jeweils als windungsfreier Getriebegang ausgebildet. Der dritte Getriebegang V3a und der sechste Getriebegang V6a bilden jeweils einen Windungsgang aus. Unter einem "Windungsgang" soll insbesondere ein Getriebegang verstanden werden, der durch zumindest eine Windungsstufe gebildet ist und/oder in dem zumindest zwei Zahnradpaarungen zumindest zweier verschiedener Zahnradebenen an einer Übertragung eines Leistungsflusses beteiligt sind. Unter einer "Windungsstufe" soll insbesondere eine Kopplung von zumindest zwei koaxial zu einer der Vorgelegewellen angeordneten Losrädern verstanden werden, die in zumindest einem als Windungsgang ausgebildeten Getriebegang dazu vorgesehen ist, einen Leistungsfluss zwischen den zumindest zwei Losrädern verschiedener Zahnradebenen zu übertragen. Zur Kopplung der Losräder ist dabei vorzugsweise eine der Schalteinheiten, eine der Vorgelegewellen oder eine Zwischenwelle vorgesehen.

Das Doppelkupplungsgetriebe ist in Vorgelegewellenbauweise ausgeführt. Die Antriebswelle 10a und das Abtriebszahnrad sind parallel versetzt zueinander angeordnet. Zur Herstellung einer Wirkverbindung zwischen der Antriebswelle 10a und dem Abtriebszahnrad umfasst das Doppelkupplungsgetriebe zwei Eingangswellen 11a, 12a, die jeweils an eine der Lastschaltkupplungen K1a, K2a angebunden sind. Die Lastschaltkupplungen K1a, K2a umfassen jeweils ein eingangsseitiges Lastschaltkupplungselement, das permanent drehfest mit der Antriebswelle 10a verbunden ist, und ein ausgangsseitiges Lastschaltkupplungselement. Die Eingangswellen 11a, 12a sind drehfest mit jeweils einem der ausgangsseitigen Lastschaltkupplungselemente verbunden. Die erste Eingangswelle 11a ist der ersten Lastschaltkupplung K1a zugeordnet. Das ausgangsseitige Lastschaltkupplungselement der ersten Lastschaltkupplung K1a ist permanent drehfest mit der ersten Eingangswelle 11a verbunden. Die zweite Eingangswelle 12a ist der zweiten Lastschaltkupplung K2a zugeordnet. Das ausgangsseitige Lastschaltkupplungselement der zweiten Lastschaltkupplung K2a ist permanent drehfest mit der zweiten Eingangswelle 12a verbunden.

Das Doppelkupplungsgetriebe umfasst eine erste Vorgelegewelle 13a. Die erste Vorgelegewelle 13a ist parallel versetzt zu den Eingangswellen 11a, 12a und/oder dem Abtriebszahnrad angeordnet. Das Doppelkupplungsgetriebe umfasst eine zweite Vorgelegewelle 14a. Die zweite Vorgelegewelle 14a ist parallel versetzt zu den Eingangswellen 11a, 12a und/oder dem Abtriebszahnrad angeordnet. Das Doppelkupplungsgetriebe umfasst eine dritte Vorgelegewelle 15a. Die dritte Vorgelegewelle 15a ist parallel versetzt zu den Eingangswellen 11a, 12a und/oder dem Abtriebszahnrad angeordnet. Das Doppelkupplungsgetriebe umfasst ein Parksperrenrad 16a. Das Parksperrenrad 16a ist zur wahlweisen Drehsperre der dritten Vorgelegewelle 15a vorgesehen. Alternativ kann das Parksperrenrad 16a auch vorteilhaft auf der ersten Vorgelegewelle 13a angeordnet sein.

Die Antriebswelle 10a und die beiden Eingangswellen 11a, 12a sind entlang einer Haupterstreckungsrichtung des Doppelkupplungsgetriebes hintereinander angeordnet. Die beiden Eingangswellen 11a, 12a sind koaxial zueinander angeordnet. Die erste Eingangswelle 11a durchsetzt die zweite Eingangswelle 12a. Die zweite Eingangswelle 12a ist als eine Hohlwelle ausgebildet. Die erste Eingangswelle 11a ist als eine Vollwelle ausgebildet. Die Antriebswelle 10a und die Eingangswellen 11a, 12a definieren eine Hauptrotationsachse des Doppelkupplungsgetriebes. Die Vorgelegewellen 13a, 14a, 15a definieren jeweils eine Nebenrotationsachse.

Das Doppelkupplungsgetriebe weist genau vier Zahnradebenen Z1a, Z2a, Z3a, Z4a auf. Die vier Zahnradebenen Z1a-Z4a sind zumindest konstruktiv zur Bildung der sechs Getriebegänge V1a-V6a vorgesehen. Weiter weist das Doppelkupplungsgetriebe genau eine Ausgangszahnradebene Z0a auf, die lediglich zur Anbindung des Abtriebszahnrads und damit zur Ausleitung eines Drehmoments aus dem Doppelkupplungsgetriebe vorgesehen ist. Die erste Zahnradebene Z1a dient insbesondere zur Verbindung der zweiten Eingangswelle 12a mit der zweiten Vorgelegewelle 14a. Die zweite Zahnradebene Z2a dient insbesondere zur Verbindung der zweiten Eingangswelle 12a mit der ersten Vorgelegewelle 13a. Die zweite Zahnradebene Z2a dient insbesondere zur Verbindung der zweiten Vorgelegewelle 14a mit der dritten Vorlegewelle 15a. Die dritte Zahnradebene Z3a dient insbesondere zur Verbindung der ersten Eingangswelle 11a mit der ersten Vorgelegewelle 13a. Die dritte Zahnradebene Z3a dient insbesondere zur Verbindung der zweiten Vorgelegewelle 14a mit der dritten Vorgelegewelle 15a. Die vierte Zahnradebene Z4a dient insbesondere zur Verbindung der ersten Eingangswelle 11a mit der zweiten Vorgelegewelle 14a.

Die Ausgangszahnradebene Z0a liegt in Bezug auf die Zahnradebenen Z1a-Z4a der Eingangskupplung am nächsten. Sie ist axial zwischen der ersten Zahnradebene Z1a und den Lastschaltkupplungen K1a, K2a angeordnet. Grundsätzlich kann die Ausgangszahnradebene Z0a aber an einer beliebigen Stelle angeordnet werden. Die Ausgangszahnradebene Z0a umfasst vier Abtriebsräder Z01a, Z02a, Z03a, Z04a. Das erste Abtriebsrad Z01a ist permanent drehfest mit der ersten Vorgelegewelle 13a verbunden. Das zweite Abtriebsrad Z02a ist permanent drehfest mit der zweiten Vorgelegewellen 14a verbunden. Das dritte Abtriebsrad Z03a ist permanent drehfest mit der dritten Vorgelegewellen 15a verbunden. Das vierte Abtriebsrad Z04a ist mit dem dritten Abtriebsrad Z03a permanent wirkverbunden. Das vierte Abtriebsrad Z04a ist auf einer nicht näher gezeigte Weise innerhalb des Doppelkupplungsgetriebes gelagert.

Die Abtriebsräder Z01a, Z02a, Z04a kämmen mit dem nicht näher dargestellten Abtriebszahnrad. Die Ausgangszahnradebene Z0a ist in sämtlichen Getriebegängen V1a-V6a dazu vorgesehen, ein Drehmoment aus dem Doppelkupplungsgetriebe auszuleiten.

Die erste Zahnradebene Z1a liegt in Bezug auf die restlichen Zahnradebenen Z2a, Z3a, Z4a der Eingangskupplung am nächsten. Die erste Zahnradebene Z1a ist als die innerste Zahnradebene der Zahnradebenen Z1a-Z4a ausgebildet. Die erste Zahnradebene Z1a ist axial zwischen der Ausgangszahnradebene Z0a und der zweiten Zahnradebene Z2a angeordnet. Die erste Zahnradebene Z1a weist ein Festrad Z11a und ein Losrad Z13a auf. Das Festrad Z11a der ersten Zahnradebene Z1a ist koaxial zu den Eingangswellen 11a, 12a angeordnet und permanent drehfest mit der zweiten Eingangswelle 12a verbunden. Das Losrad Z13a der ersten Zahnradebene Z1a ist koaxial zu der zweiten Vorgelegewelle 14a angeordnet und drehbar auf der zweiten Vorgelegewelle 14a gelagert. Das Festrad Z11a und das Losrad Z13a bilden eine Zahnradpaarung der ersten Zahnradebene Z1a aus. Die erste Zahnradebene Z1a weist somit ein koaxial zur zweiten Vorgelegewelle 14a angeordnetes Losrad Z13a auf, das mit dem koaxial zu den Eingangswellen 11a, 12a angeordneten Festrad Z11a der ersten Zahnradebene Z1a permanent kämmend verbunden ist. Die erste Zahnradebene Z1a ist damit als Einfachradebene ausgebildet. Die Zahnradpaarung der ersten Zahnradebene Z1a ist zur Bildung des vierten Getriebegangs V4a vorgesehen. Die Zahnradpaarung der ersten Zahnradebene Z1a ist ferner zur Bildung des sechsten Getriebegangs V6a vorgesehen.

Die zweite Zahnradebene Z2a ist ausgehend von der Eingangskupplung entlang der Haupterstreckungsrichtung nach der ersten Zahnradebene Z1a angeordnet. Die zweite Zahnradebene Z2a ist axial zwischen der ersten Zahnradebene Z1a und der dritten Zahnradebene Z3a angeordnet. Die zweite Zahnradebene Z2a weist ein Festrad Z21a, ein erstes Losrad Z22a, ein zweites Losrad Z23a und ein drittes Losrad Z24a auf. Das Festrad Z21a der zweiten Zahnradebene Z2a ist koaxial zu den Eingangswellen 11a, 12a angeordnet und permanent drehfest mit der zweiten Eingangswelle 12a verbunden. Das erste Losrad Z22a der zweiten Zahnradebene Z2a ist koaxial zu der ersten Vorgelegewelle 13a angeordnet und drehbar zur ersten Vorgelegewelle 13a gelagert. Das erste Losrad Z22a der zweiten Zahnradebene Z2a ist zur Bildung des zweiten Getriebegangs V2a vorgesehen. Das Festrad Z21a und das erste Losrad Z22a der zweiten Zahnradebene Z2a bilden eine erste Zahnradpaarung der zweiten Zahnradebene Z2a aus.

Das zweite Losrad Z23a der zweiten Zahnradebene Z2a ist koaxial zu der zweiten Vorgelegewelle 14a angeordnet und drehbar auf der zweiten Vorgelegewelle 14a gelagert. Das dritte Losrad Z24a der zweiten Zahnradebene Z2a ist koaxial zu der dritten Vorgelegewelle 15a angeordnet und drehbar auf der dritten Vorgelegewelle 15a gelagert. Das zweite Losrad Z23a der zweiten Zahnradebene Z2a und das dritte Losrad Z24a der zweiten Zahnradebene Z2a bilden eine zweite Zahnradpaarung der zweiten Zahnradebene Z2a aus. Das zweite Losrad Z23a der zweiten Zahnradebene Z2a ist mit dem dritten Losrad Z24a der zweiten Zahnradebene Z2a permanent kämmend verbunden. Das zweite Losrad Z23a der zweiten Zahnradebene Z2a ist mit dem Losrad Z13a der ersten Zahnradebene Z1a permanent drehfest verbunden. Das Losrad Z13a der ersten Zahnradebene Z1a ist zur Schaltung des vierten Getriebegangs V4a vorgesehen. Das zweite Losrad Z23a der zweiten Zahnradebene Z2a ist zur Bildung des sechsten Getriebegangs V6a vorgesehen.

Die dritte Zahnradebene Z3a ist ausgehend von der Eingangskupplung entlang der Haupterstreckungsrichtung nach der zweiten Zahnradebene Z2a angeordnet. Die dritte Zahnradebene Z3a ist axial zwischen der zweiten Zahnradebene Z2a und der vierten Zahnradebene Z4a angeordnet. Die dritte Zahnradebene Z3a weist ein Festrad Z31a, ein erstes Losrad Z32a, ein zweites Losrad Z33a und ein drittes Losrad Z34a auf.
Das Festrad Z31a der dritten Zahnradebene Z3a ist koaxial zu den Eingangswellen 11a, 12a angeordnet und permanent drehfest mit der ersten Eingangswelle 11a verbunden. Das erste Losrad Z32a der dritten Zahnradebene Z3a ist koaxial zu der ersten Vorgelegewelle 13a angeordnet und drehbar auf der ersten Vorgelegewelle 13a gelagert. Das zweite Losrad Z33a der dritten Zahnradebene Z3a ist koaxial zu der zweiten Vorgelegewelle 14a angeordnet und drehbar auf der zweiten Vorgelegewelle 14a gelagert. Das dritte Losrad Z34a der dritten Zahnradebene Z3a ist koaxial zu der dritten Vorgelegewelle 15a angeordnet und drehbar auf der dritten Vorgelegewelle 15a gelagert.

Das erste Losrad Z32a der dritten Zahnradebene Z3a und das Festrad Z31a der dritten Zahnradebene Z3a bilden eine erste Zahnradpaarung der dritten Zahnradebene Z3a aus. Das zweite Losrad Z33a der dritten Zahnradebene Z3a und das dritte Losrad Z3a der dritten Zahnradebene Z3a bilden eine zweite Zahnradpaarung der dritten Zahnradebene Z3a aus. Die erste Zahnradpaarung der dritten Zahnradebene Z3a ist zur Bildung des fünften Getriebegangs V5a vorgesehen. Das zweite Losrad Z33a der dritten Zahnradebene Z3a ist mit dem Losrad Z43a der vierten Zahnradebene Z4a permanent drehfest verbunden. Die zweite Zahnradpaarung der dritten Zahnradebene Z3a ist zur Bildung des dritten Getriebegangs V3a vorgesehen.

Die vierte Zahnradebene Z4a ist ausgehend von der Eingangskupplung entlang der Haupterstreckungsrichtung nach der dritten Zahnradebene Z3a angeordnet. Die vierte Zahnradebene Z4a ist im Hinblick auf die Lastschaltkupplungen K1a, K2a im Vergleich zu den restlichen drei Zahnradebenen Z1a, Z2a, Z3a als äußerste Zahnradebene ausgeführt. Die vierte Zahnradebene Z4a ist ausgehend von der Eingangskupplung entlang der Haupterstreckungsrichtung als letzte der Zahnradebenen Z1a-Z4a ausgeführt. Sie ist als die äußerste Zahnradebene der Zahnradebenen Z1a-Z4a ausgebildet.

Die vierte Zahnradebene Z4a umfasst ein Festrad Z41a. Die vierte Zahnradebene Z4a umfasst ein Losrad Z43a. Genauer gesagt umfasst die vierte Zahnradebene Z4a lediglich ein Festrad Z41a und das Losrad Z43a. Das Festrad Z41a der vierten Zahnradebene Z4a ist koaxial zu den Eingangswellen 11a, 12a angeordnet und permanent drehfest mit der ersten Eingangswelle 11a verbunden. Das Losrad Z43a der vierten Zahnradebene Z4a ist koaxial zu der zweiten Vorgelegewelle 14a angeordnet und drehbar auf der zweiten Vorgelegewelle 14a gelagert. Das Festrad Z41a der vierten Zahnradebene Z4a und das Losrad Z43a der vierten Zahnradebene Z4a bilden eine einzige Zahnradpaarung der vierten Zahnradebene Z4a aus. Die vierte Zahnradebene Z4a weist somit ein einziges koaxial zu einer der Vorgelegewellen 14a angeordnetes Losrad Z43a auf, das mit dem koaxial zu den Eingangswellen 11a, 12a angeordneten Festrad Z41a der vierten Zahnradebene Z4a permanent kämmend verbunden ist. Die vierte Zahnradebene Z4a ist damit als Einfachradebene ausgebildet. Die Zahnradpaarung der vierten Zahnradebene Z4a ist zur Bildung des ersten Getriebegangs V1a und des dritten Getriebegangs V3a vorgesehen. Das drehbar auf der zweiten Vorgelegewelle 14a angeordnete Losrad Z43a der vierten Zahnradebene Z4a ist zur windungsfreien Bildung des ersten Getriebegangs V1a vorgesehen.

Alle vier Zahnradebenen Z1a-Z4a weisen jeweils ein koaxial zu den Eingangswellen 11a, 12a angeordnetes Festrad Z11a, Z21a, Z31a, Z41a auf. Sämtliche Festräder Z11a, Z21a, Z31a, Z41a der Zahnradebenen Z1a-Z4a sind permanent drehfest mit einer der Eingangswellen 11a, 12a verbunden. Dabei sind genau zwei Festräder Z11a, Z21a der insgesamt vier Festräder Z11a, Z21a, Z31a, Z41a permanent drehfest mit der zweiten Eingangswelle 12a und genau zwei Festräder Z31a, Z41a der insgesamt vier Festräder Z11a, Z21a, Z31a, Z41a permanent drehfest mit der ersten Eingangswelle 11a verbunden. Von den vier Zahnradebenen Z1a-Z4a liegt die erste Zahnradebene Z1a den Lastschaltkupplungen K1a, K2a am nächsten. Die zweite Zahnradebene Z2a liegt zur ersten Zahnradebene Z2a benachbart. Die dritte Zahnradebene Z3a liegt zur zweiten Zahnradebene Z2a benachbart. Die vierte Zahnradebene Z4a liegt zur dritten Zahnradebene Z3a benachbart.

Das Doppelkupplungsgetriebe weist genau acht Losräder Z13a, Z22a, Z23a, Z24a, Z32a, Z33a, Z34a, Z43a auf. Koaxial und/oder drehbar auf der ersten Vorgelegewelle 13a sind genau zwei Losräder Z22a, Z32a der insgesamt acht Losräder Z13a, Z22a, Z23a, Z24a, Z32a, Z33a, Z34a, Z43a angeordnet. Die zwei koaxial und/oder drehbar auf der ersten Vorgelegewelle 13a angeordneten Losräder Z22a, Z32a sind zur windungsfreien Bildung des zweiten Getriebegangs V2a und des fünften Getriebegangs V5a vorgesehen.

Koaxial und/oder drehbar auf der zweiten Vorgelegewelle 14a sind genau vier Losräder Z13a, Z23a, Z33a, Z43a der insgesamt acht Losräder Z13a, Z22a, Z23a, Z24a, Z32a, Z33a, Z34a, Z43a angeordnet. Die vier koaxial und/oder drehbar auf der zweiten Vorgelegewelle 14a angeordneten Losräder Z13a, Z23a, Z33a, Z43a sind zur windungsfreien Bildung des ersten Getriebegangs V1a und des vierten Getriebegangs V4a vorgesehen.

Koaxial und/oder drehbar auf der dritten Vorgelegewelle 15a sind genau zwei Losräder Z24a, Z34a der insgesamt acht Losräder Z13a, Z22a, Z23a, Z24a, Z32a, Z33a, Z34a, Z43a angeordnet. Die zwei koaxial und/oder drehbar auf der dritten Vorgelegewelle 15a angeordneten Losräder Z24a, Z34a sind zur Bildung des dritten Getriebegangs V3a und des sechsten Getriebegangs V6a vorgesehen. Die zwei koaxial und/oder drehbar auf der zweiten Vorgelegewelle 14a angeordneten Losräder Z23a, Z33a sind zur Bildung des gewundenen dritten Getriebegangs V3a und des gewundenen sechsten Getriebegangs V6a vorgesehen.

Zur Bildung der sechs Getriebegänge V1a, V2a, V3a, V4a, V5a, V6a umfasst das Doppelkupplungsgetriebe genau sechs Schalteinheiten S1a, S2a, S3a, S4a, S5a, S6a.

Die sechs Schalteinheiten S1a-S6a sind in Verbindung mit den vier Zahnradebenen Z1a-Z4a zumindest konstruktiv zur Schaltung der sechs Getriebegänge V1a, V2a, V3a, V4a, V5a, V6a vorgesehen. Die sechs Schalteinheiten S1a, S2a, S3a, S4a, S5a, S6a sind jeweils koaxial zu einer der Vorgelegewellen 13a, 14a, 15a angeordnet.

Die sechs Schalteinheiten S1a, S2a, S3a, S4a, S5a, S6a umfassen jeweils ein erstes Kopplungselement und ein zweites Kopplungselement, die drehfest miteinander verbindbar sind. Das jeweils erste Kopplungselement dieser Schalteinheiten S1a, S2a, S3a, S4a, S5a, S6a ist als ein Gleichlaufkörper ausgebildet, der drehfest mit einer auf dem Gleichlaufkörper angeordneten Schiebemuffe der entsprechenden Schalteinheit S1a, S2a, S3a, S4a, S5a, S6a verbunden ist. Das jeweils zweite Kopplungselement dieser Schalteinheiten S1a, S2a, S3a, S4a, S5a, S6a weist eine Schaltverzahnung zur drehfesten Verbindung mit der Schiebemuffe auf. Die Schalteinheiten S1a, S2a, S3a, S4a, S5a, S6a sind vorzugsweise als synchronisierte Formschlusskupplungen ausgeführt. Insbesondere können diese Schalteinheiten S1a, S2a, S3a, S4a, S5a, S6a zumindest teilweise als rein formschlüssige Klauenschalteinheiten ohne reibschlüssige Synchronisierung ausgeführt werden, beispielsweise wenn das Doppelkupplungsgetriebe eine an einer der Vorgelegewellen 13a, 14a, 15a angeordnete Zentralsynchronisierung aufweist und/oder die Schalteinheiten S1a, S2a, S3a, S4a, S5a, S6a mittels der Eingangskupplung synchronisiert werden. Grundsätzlich sind aber auch andere Ausgestaltungen denkbar.

Die Schalteinheiten S1a, S2a, S3a, S4a, S5a, S6a sind jeweils dazu vorgesehen, ein koaxial zu einer der Vorgelegewellen 13a, 14a, 15a angeordnetes Losrad Z13a, Z22a, Z23a, Z24a, Z32a, Z33a, Z34a, Z43a einer Zahnradebene Z1a-Z4a drehfest mit einer der Vorgelegewellen 13a, 14a, 15a zu verbinden. Die ersten Kopplungselemente der sechs Schalteinheiten S1a, S2a, S3a, S4a, S5a, S6a sind jeweils permanent drehfest mit einer der Vorgelegewellen 13a, 14a, 15a und die zweiten Kopplungselemente der sechs Schalteinheiten S1a, S2a, S3a, S4a, S5a, S6a sind jeweils permanent drehfest mit einem der Losräder Z13a, Z22a, Z23a, Z24a, Z32a, Z33a, Z34a, Z43a verbunden.

Eine erste Schalteinheit S1a der Schalteinheiten S1a, S2a, S3a, S4a, S5a, S6a und eine zweite Schalteinheit S2a der Schalteinheiten S1a, S2a, S3a, S4a, S5a, S6a sind als Doppelschalteinheit zusammengefasst ausgebildet. Die erste Schalteinheit S1a und die zweite Schalteinheit S2a umfassen jeweils ein gemeinsames erstes Kopplungselement und damit eine gemeinsame Schiebemuffe, die zur Schaltung der ersten Schalteinheit S1a in eine erste Schaltstellung, zur Entkopplung in eine mittlere Neutralstellung und zur Schaltung der zweiten Schalteinheit S2a in eine zweite Schaltstellung geschaltet wird. Die als Doppelschalteinheit zusammengefassten Schalteinheiten S1a, S2a sind nur einseitig schaltbar, d.h. es kann lediglich eine einzelne der Schalteinheiten S1a, S2a der Doppelschalteinheit geschaltet werden.

Eine dritte Schalteinheit S3a der Schalteinheiten S1a, S2a, S3a, S4a, S5a, S6a und eine vierte Schalteinheit S4a der Schalteinheiten S1a, S2a, S3a, S4a, S5a, S6a sind als Doppelschalteinheit zusammengefasst ausgebildet. Die dritte Schalteinheit S3a und die vierte Schalteinheit S4a umfassen jeweils ein gemeinsames erstes Kopplungselement und damit eine gemeinsame Schiebemuffe, die zur Schaltung der dritten Schalteinheit S3a in eine erste Schaltstellung, zur Entkopplung in eine mittlere Neutralstellung und zur Schaltung der vierten Schalteinheit S4a in eine zweite Schaltstellung geschaltet wird. Die als Doppelschalteinheit zusammengefassten Schalteinheiten S3a, S4a sind nur einseitig schaltbar, d.h. es kann lediglich eine einzelne der Schalteinheiten S3a, S4a der Doppelschalteinheit geschaltet werden.

Eine fünfte Schalteinheit S5a der Schalteinheiten S1a, S2a, S3a, S4a, S5a, S6a und eine sechste Schalteinheit S6a der Schalteinheiten S1a, S2a, S3a, S4a, S5a, S6a sind als Doppelschalteinheit zusammengefasst ausgebildet. Die fünfte Schalteinheit S5a und die sechste Schalteinheit S6a umfassen jeweils ein gemeinsames erstes Kopplungselement und damit eine gemeinsame Schiebemuffe, die zur Schaltung der fünften Schalteinheit S5a in eine erste Schaltstellung, zur Entkopplung in eine mittlere Neutralstellung und zur Schaltung der sechsten Schalteinheit S6a in eine zweite Schaltstellung geschaltet wird. Die als Doppelschalteinheit zusammengefassten Schalteinheiten S5a, S6a sind nur einseitig schaltbar, d.h. es kann lediglich eine einzelne der Schalteinheiten S5a, S6a der Doppelschalteinheit geschaltet werden.

Somit sind alle Schalteinheiten S1a-S6a zu Doppelschalteinheiten zusammengefasst ausgebildet. Die sechs Schalteinheiten S1a-S6a des Doppelkupplungsgetriebes weisen insgesamt drei Schiebemuffen auf.

Die erste Schalteinheit S1a verbindet in ihrer Schaltstellung das erste Losrad Z32a der dritten Zahnradebene Z3a und die erste Vorgelegewelle 13a drehfest miteinander und trennt in ihrer Neutralstellung das erste Losrad Z32a der dritten Zahnradebene Z3a und die erste Vorgelegewelle 13a voneinander. Die erste Schalteinheit S1a ist koaxial zu der ersten Vorgelegewelle 13a angeordnet. Die erste Schalteinheit S1a ist axial zwischen der zweiten Zahnradebene Z2a und der dritten Zahnradebene Z3a angeordnet. Das erste Kopplungselement der ersten Schalteinheit S1a ist permanent drehfest mit dem ersten Losrad Z32a der dritten Zahnradebene Z3a verbunden. Das zweite Kopplungselement der ersten Schalteinheit S1a ist permanent drehfest mit der ersten Vorgelegewelle 13a verbunden. Die erste Schalteinheit S1a ist im fünften Getriebegang V5a geschlossen.

Die zweite Schalteinheit S2a verbindet in ihrer Schaltstellung das erste Losrad Z22a der zweiten Zahnradebene Z2a und die erste Vorgelegewelle 13a drehfest miteinander und trennt in ihrer Neutralstellung das erste Losrad Z22a der zweiten Zahnradebene Z2a und die erste Vorgelegewelle 13a voneinander. Die zweite Schalteinheit S2a ist koaxial zu der ersten Vorgelegewelle 13a angeordnet. Die zweite Schalteinheit S2a ist axial zwischen der zweiten Zahnradebene Z2a und der dritten Zahnradebene Z3a angeordnet. Das erste Kopplungselement der zweiten Schalteinheit S2a ist permanent drehfest mit dem ersten Losrad Z22a der zweiten Zahnradebene Z2a verbunden. Das zweite Kopplungselement der zweiten Schalteinheit S2a ist permanent drehfest mit der ersten Vorgelegewelle 13a verbunden. Die zweite Schalteinheit S2a ist im zweiten Getriebegang V2a geschlossen.

Das zweite Kopplungselement der ersten Schalteinheit S1a ist permanent drehfest mit dem zweiten Kopplungselement der zweiten Schalteinheit S2a verbunden. Das zweite Kopplungselement, das beiden Schalteinheiten S1a, S2a zugeordnet ist, ist permanent drehfest mit der ersten Vorgelegewelle 13a verbunden. Das zweite Kopplungselement der Schalteinheiten S1a, S2a ist axial zwischen den ersten Kopplungselementen der Schalteinheiten S1a, S2a angeordnet.

Die dritte Schalteinheit S3a verbindet in ihrer Schaltstellung das Losrad Z43a der vierten Zahnradebene Z4a und die zweite Vorgelegewelle 14a drehfest miteinander und trennt in ihrer Neutralstellung das Losrad Z43a der vierten Zahnradebene Z4a und die zweite Vorgelegewelle 14a voneinander. Die dritte Schalteinheit S3a ist koaxial zu der zweiten Vorgelegewelle 14a angeordnet. Die dritte Schalteinheit S3a ist axial zwischen der zweiten Zahnradebene Z2a und der dritten Zahnradebene Z3a angeordnet. Das erste Kopplungselement der dritten Schalteinheit S3a ist permanent drehfest mit dem zweiten Losrad Z33a der dritten Zahnradebene Z3a verbunden. Das zweite Kopplungselement der dritten Schalteinheit S3a ist permanent drehfest mit der zweiten Vorgelegewelle 14a verbunden. Die dritte Schalteinheit S3a ist im ersten Getriebegang V1a geschlossen.

Die vierte Schalteinheit S4a verbindet in ihrer Schaltstellung das Losrad Z13a der ersten Zahnradebene Z1a und die zweite Vorgelegewelle 14a drehfest miteinander und trennt in ihrer Neutralstellung das Losrad Z13a der ersten Zahnradebene Z1a und die zweite Vorgelegewelle 14a voneinander. Die vierte Schalteinheit S4a ist koaxial zu der zweiten Vorgelegewelle 14a angeordnet. Die vierte Schalteinheit S4a ist axial zwischen der zweiten Zahnradebene Z2a und der dritten Zahnradebene Z3a angeordnet. Das erste Kopplungselement der vierten Schalteinheit S4a ist permanent drehfest mit dem zweiten Losrad Z23a der zweiten Zahnradebene Z2a verbunden. Das zweite Kopplungselement der vierten Schalteinheit S4a ist permanent drehfest mit der zweiten Vorgelegewelle 14a verbunden. Die vierte Schalteinheit S4a ist im vierten Getriebegang V4a geschlossen.

Das zweite Kopplungselement der dritten Schalteinheit S3a ist permanent drehfest mit dem zweiten Kopplungselement der vierten Schalteinheit S4a verbunden. Das zweite Kopplungselement, das beiden Schalteinheiten S3a, S4a zugeordnet ist, ist permanent drehfest mit der zweiten Vorgelegewelle 14a verbunden. Das zweite Kopplungselement der Schalteinheiten S3a, S4a ist axial zwischen den ersten Kopplungselementen der Schalteinheiten S3a, S4a angeordnet.

Die fünfte Schalteinheit S5a verbindet in ihrer Schaltstellung das dritte Losrad Z34a der dritten Zahnradebene Z3a und die dritte Vorgelegewelle 15a drehfest miteinander und trennt in ihrer Neutralstellung das dritte Losrad Z34a der dritten Zahnradebene Z3a und die dritte Vorgelegewelle 15a voneinander. Die fünfte Schalteinheit S5a ist koaxial zu der dritten Vorgelegewelle 15a angeordnet. Die fünfte Schalteinheit S5a ist axial zwischen der zweiten Zahnradebene Z2a und der dritten Zahnradebene Z3a angeordnet. Das erste Kopplungselement der fünften Schalteinheit S5a ist permanent drehfest mit dem dritten Losrad Z34a der dritten Zahnradebene Z3a verbunden. Das zweite Kopplungselement der fünften Schalteinheit S5a ist permanent drehfest mit der dritten Vorgelegewelle 15a verbunden. Die fünfte Schalteinheit S5a ist im dritten Getriebegang V3a geschlossen.

Die sechste Schalteinheit S6a verbindet in ihrer Schaltstellung das dritte Losrad Z24a der zweiten Zahnradebene Z2a und die dritte Vorgelegewelle 15a drehfest miteinander und trennt in ihrer Neutralstellung das dritte Losrad Z24a der zweiten Zahnradebene Z2a und die dritte Vorgelegewelle 15a voneinander. Die sechste Schalteinheit S6a ist koaxial zu der dritten Vorgelegewelle 15a angeordnet. Die sechste Schalteinheit S6a ist axial zwischen der zweiten Zahnradebene Z2a und der dritten Zahnradebene Z3a angeordnet. Das erste Kopplungselement der sechsten Schalteinheit S6a ist permanent drehfest mit dem dritten Losrad Z24a der zweiten Zahnradebene Z2a verbunden. Das zweite Kopplungselement der sechsten Schalteinheit S6a ist permanent drehfest mit der dritten Vorgelegewelle 15a verbunden. Die sechste Schalteinheit S6a ist im sechsten Getriebegang V6a geschlossen.

Die sechs Schalteinheiten S1a-S6a sind zwischen genau zwei direkt benachbarten Zahnradebenen Z2a, Z3a der vier Zahnradebenen Z1a-Z4a angeordnet. Die sechs Schalteinheiten S1a-S6a sind dazu vorgesehen, jeweils ein Losrad Z13a, Z22a, Z23a, Z24a, Z32a, Z33a, Z34a, Z43a einer der zwei benachbarten Zahnradebenen Z2a, Z3a drehfest mit einer der Vorgelegewellen 13a, 14a, 15a zu verbinden. Die sechs Schalteinheiten S1a-S6a sind zur Bildung der sechs Getriebegänge V1a-V6a ausschließlich zwischen der zweiten und dritten Zahnradebene Z2a, Z3a angeordnet.

Das zweite Kopplungselement der fünften Schalteinheit S5a ist permanent drehfest mit dem zweiten Kopplungselement der sechsten Schalteinheit S6a verbunden. Das zweite Kopplungselement, das beiden Schalteinheiten S5a, S6a zugeordnet ist, ist permanent drehfest mit der dritten Vorgelegewelle 15a verbunden. Das zweite Kopplungselement der Schalteinheiten S5a, S6a ist axial zwischen den ersten Kopplungselementen der Schalteinheiten S5a, S6a angeordnet.

Die zur Schaltung der zu Doppelschalteinheiten zusammengefassten Schalteinheiten S1a-S6a vorgesehene Aktoren sind als Drei-Stellungs-Aktoren ausgebildet. Die zur Schaltung der zu Doppelschalteinheiten zusammengefassten Schalteinheiten S1a-S6a vorgesehene Aktoren umfassen eine Schaltstellung, in der die Doppelschalteinheiten in ihrer ersten Schaltstellung geschaltet ist, eine Neutralstellung, in der die entsprechende Doppelschalteinheit in ihrer Neutralstellung geschaltet ist, und eine zweite Schaltstellung, in der die entsprechende Doppelschalteinheit in ihrer zweiten Schaltstellung geschaltet ist.

Zur Schaltung der sechs Schalteinheiten S1a-S6a weist das Doppelkupplungsgetriebe drei Aktoren auf. Die Aktoren sind jeweils hydraulisch ausgeführt. Grundsätzlich ist aber auch eine Ausgestaltung mit mehr Aktoren denkbar. Die Aktoren können dabei beispielsweise in Form doppelt wirkender Zylinder ausgebildet sein. Es sind aber auch elektrische oder pneumatische Aktoren denkbar.

In der Figur 2 ist ein Schaltschema des Doppelkupplungsgetriebes dargestellt. In dem Schaltschema stellt ein "x" eine geschlossene und ein "fehlendes x" eine geöffnete Schalteinheit S1a-S6a bzw. Lastschaltkupplung K1a, K2a in dem entsprechenden Getriebegang V1a-V6a dar. Die Bildung der Getriebegänge V1a-V6a durch Schließen zumindest einer der Schalteinheiten S1a-S6a und zumindest einer der Lastschaltkupplungen K1a, K2a ist in dem Schaltschema in der Figur 2 dargestellt. Einem Fachmann ergibt sich aus dem Schaltschema in der Figur 2 in Verbindung mit dem Getriebeschema in der Figur 1 für jeden Getriebegang V1a-V6a ein Leistungsfluss und für als Windungsgänge ausgebildete Getriebegänge V3a, V6a die entsprechenden Windungsstufen. Das Doppelkupplungsgetriebe ist automatisiert oder teilautomatisiert ausgebildet.

Die sechs Getriebegänge V1a-V6a sind untereinander direkt lastschaltbar. Zur Schaltung unter Last wird der zu schaltende Getriebegang V1a-V6a gebildet, indem die entsprechenden Schalteinheiten S1a-S6a geschlossen werden. Anschließend wird diejenige der Lastschaltkupplungen K1a, K2a, die dem zu schaltenden Getriebegang V1a-V6a zugeordnet ist, sukzessive geschlossen, während zeitgleich die andere Lastschaltkupplung K1a, K2a, die dem abzuschaltenden Getriebegang V1a-V6a zugeordnet ist, sukzessive geöffnet wird.

Die ungeraden lastschaltbaren Getriebegänge V1a, V3a, V5a sind der ersten Lastschaltkupplung K1a zugeordnet. Die ungeraden lastschaltbaren Getriebegänge V1a, V3a, V5a sind der ersten Eingangswelle 11a zugeordnet. Damit überträgt die erste Eingangswelle 11a in den ungeraden lastschaltbaren Getriebegängen V1a, V3a, V5a ein Drehmoment zwischen der Antriebswelle 10a und zumindest einer der Vorgelegewellen 13a, 14a, 15a. Die geraden lastschaltbaren Getriebegänge V2a, V4a, V6a sind der zweiten Lastschaltkupplung K2a zugeordnet. Die geraden lastschaltbaren Getriebegänge V2a, V4a, V6a sind der zweiten Eingangswelle 12a zugeordnet. Damit überträgt die zweite Eingangswelle 12a in den geraden lastschaltbaren Getriebegängen V2a, V4a, V6a ein Drehmoment zwischen der Antriebswelle 10a und zumindest einer der Vorgelegewellen 13a, 14a, 15a. Zusätzlich mögliche Lastschaltungen zwischen den Getriebegängen V1a-V6a, die über eine rein sequentielle Lastschaltbarkeit hinausgehen, ergeben sich unmittelbar aus der Schaltlogik.

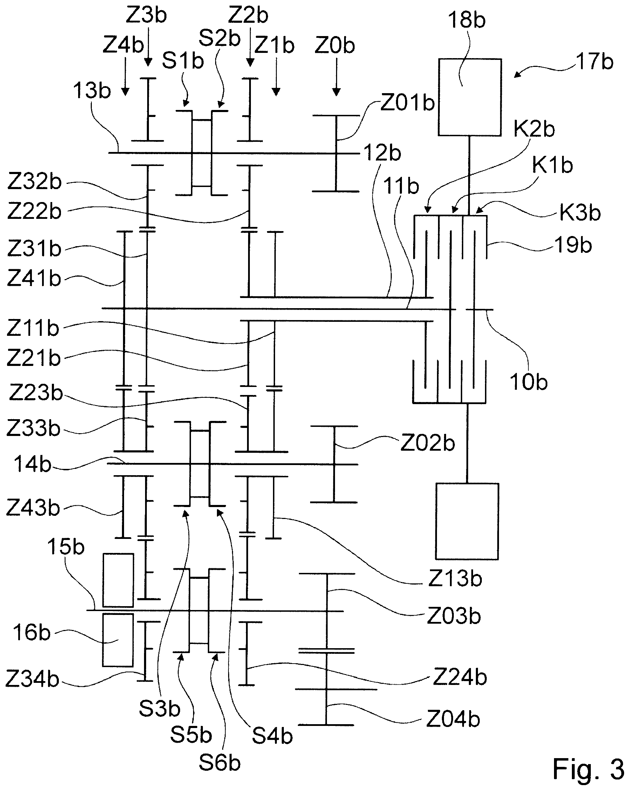

In den Figuren 3 bis 5 sind zwei weitere Ausführungsbeispiele der Erfindung gezeigt. Die nachfolgenden Beschreibungen beschränken sich zumindest im Wesentlichen auf die Unterschiede zwischen den Ausführungsbeispielen, wobei bezüglich gleichbleibender Bauteile, Merkmale und Funktionen auf die Beschreibung zumindest eines der vorhergehenden Ausführungsbeispielen verwiesen werden kann. Zur Unterscheidung der Ausführungsbeispiele wurde der Buchstabe a in den Bezugszeichen des Ausführungsbeispiels in den Figuren 1 und 2 durch die Buchstaben b und c in den Bezugszeichen der Ausführungsbeispiele in den Figuren 3 bis 5 ersetzt. Bezüglich gleich bezeichneter Bauteile, insbesondere in Bezug auf Bauteile mit gleichen Bezugszeichen, kann grundsätzlich auch auf die Zeichnung und/oder die Beschreibung zumindest eines der vorhergehenden Ausführungsbeispielen verwiesen werden.

Wie in der Figur 3 gezeigt, kann das Doppelkupplungsgetriebe um ein Hybridantriebsmodul 17b erweitert werden. Das Doppelkupplungsgetriebe weist hierzu einen Elektromotor 18b auf. Der Elektromotor 18b ist mit einem Kupplungselement 19b der Lastschaltkupplungen K1b, K2b permanent drehfest verbunden. Das Kupplungselement 19b bildet ein gemeinsames Kupplungselement der Lastschaltkupplungen K1b, K2b aus. Mittels dem Elektromotor kann beispielsweise eine Starter-Generator-Betriebsart realisiert werden. Zur Realisierung weiterer Hybrid-Betriebsarten ist es denkbar, dass das Doppelkupplungsgetriebe einen permanent oder schaltbar an eine der Vorgelegewellen 13b, 14b, 15b angebundenen Elektromotor aufweist. Der Elektromotor 18b ist über die Lastschaltkupplungen K1b, K2b drehfest mit jeweils einer der Eingangswellen 11b, 12b koppelbar.

Das Doppelkupplungsgetriebe umfasst eine dritte Lastschaltkupplung K3b zur wahlweisen Anbindung einer Brennkraftmaschine an den Elektromotor 18b. Das Kupplungselement 19b bildet dabei eines der Kupplungselemente der dritten Lastschaltkupplung K3b aus. Ein anderes Kupplungselement ist mit der von der Brennkraftmaschine antreibbaren Antriebwelle 10b drehfest gekoppelt.

Das Getriebeschema des zweiten Ausführungsbeispiels unterscheidet sich weiter nicht vom in der Figur 1 gezeigten Getriebeschema des ersten Ausführungsbeispiels des Doppelkupplungsgetriebes. Zur Vermeidung von Wiederholungen wird daher auf die Beschreibung der Figur 1 verwiesen. Das Schaltschema des Doppelkupplungsgetriebes entspricht dem der Figur 2.

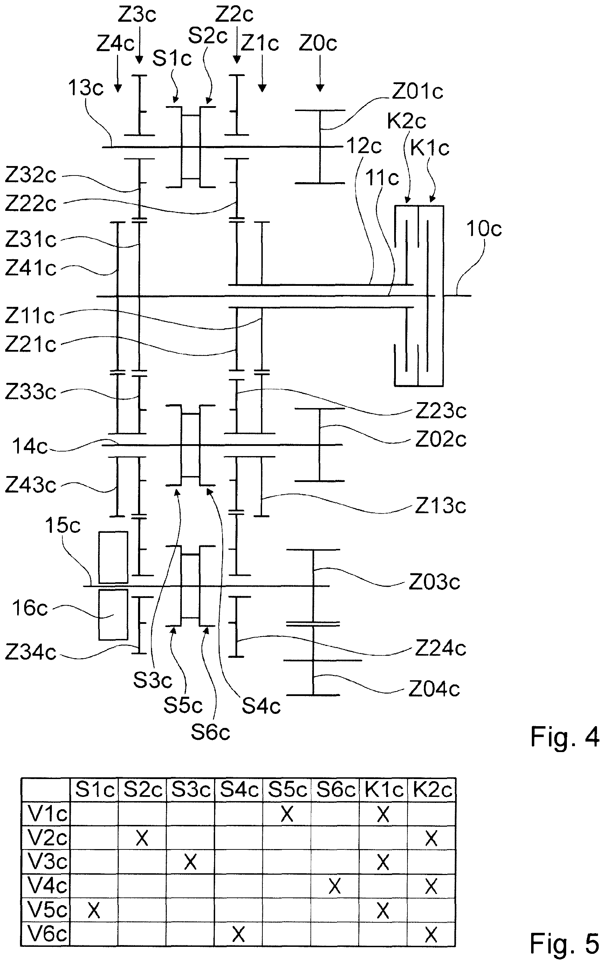

Figur 5 zeigt ein weiteres Ausführungsbeispiel eines Doppelkupplungsgetriebes. Das Getriebeschema des dritten Ausführungsbeispiels unterscheidet sich nicht vom in der Figur 1 gezeigten Getriebeschema des ersten Ausführungsbeispiels des Doppelkupplungsgetriebes. Zur Vermeidung von Wiederholungen wird daher auf die Beschreibung der Figur 1 verwiesen. Wie jedoch in der Figur 6 gezeigt, folgt das Doppelkupplungsgetriebe des dritten Ausführungsbeispiels einer alternativen Schaltlogik.

Im Unterschied zum ersten Ausführungsbeispiel ist die dritte Schalteinheit S3c ist im dritten Getriebegang V3c geschlossen. Die vierte Schalteinheit S4c ist im sechsten Getriebegang V6c geschlossen. Die fünfte Schalteinheit S5c ist im ersten Getriebegang V1c geschlossen. Die sechste Schalteinheit S6c ist im vierten Getriebegang V4c geschlossen.

### Bezugszeichenliste

- 10: Antriebswelle
- 11: Eingangswelle
- 12: Eingangswelle
- 13: Vorgelegewelle
- 14: Vorgelegewelle
- 15: Vorgelegewelle
- 16: Parksperrenrad
- 17: Hybridantriebsmodul
- 18: Elektromotor
- 19: Kupplungselement
- K1: Lastschaltkupplung
- K2: Lastschaltkupplung
- K3: Lastschaltkupplung
- S1: Schalteinheit
- S2: Schalteinheit
- S3: Schalteinheit
- S4: Schalteinheit
- S5: Schalteinheit
- S6: Schalteinheit
- Z1: Zahnradebene
- Z11: Festrad
- Z13: Losrad
- Z2: Zahnradebene
- Z21: Festrad
- Z22: Losrad
- Z23: Losrad
- Z24: Losrad
- Z3: Zahnradebene
- Z31: Festrad
- Z32: Losrad
- Z33: Losrad
- Z34: Losrad
- Z4: Zahnradebene
- Z41: Festrad
- Z43: Losrad
- Z0: Ausgangszahnradebene
- Z01: Abtriebsrad
- Z02: Abtriebsrad
- Z03: Abtriebsrad
- Z04: Abtriebsrad
- V1: Getriebegang
- V2: Getriebegang
- V3: Getriebegang
- V4: Getriebegang
- V5: Getriebegang
- V6: Getriebegang

## Patentansprüche

1. Doppelkupplungsgetriebe zur Schaltung von zumindest sechs sequentiell schaltbaren Getriebegängen (V1a-V6a; V1c-V6c), mit einer ersten Eingangswelle (11a-11c), die zur Anbindung an eine erste Lastschaltkupplung (K1a-K1c) vorgesehen ist, mit einer zweiten Eingangswelle (12a-12c), die zur Anbindung an eine zweite Lastschaltkupplung (K2a-K2c) vorgesehen ist, mit einer ersten Vorgelegewelle (13a-13c), mit einer zweiten Vorgelegewelle (14a-14c), mit einer dritten Vorgelegewelle (15a-15c), mit zumindest sechs Schalteinheiten (S1a-S6a; S1b-S6b; S1c-S6c) und mit zumindest einer ersten, einer zweiten, einer dritten und einer vierten Zahnradebene (Z1a-Z4a; Z1b-Z4b; Z1c-Z4c),
wobei die zumindest sechs Schalteinheiten (S1a-S6a; S1b-S6b; S1c-S6c) zwischen genau zwei direkt benachbarten Zahnradebenen (Z2a-Z2c, Z3a-Z3c) der zumindest vier Zahnradebenen (Z1a-Z4a; Z1b-Z4b; Z1c-Z4c) angeordnet sind, wobei die zumindest sechs Schalteinheiten (Z1a-Z4a; Z1b-Z4b; Z1c-Z4c) dazu vorgesehen sind, jeweils ein Losrad (Z13a-Z13c, Z22a-Z22c, Z23a-Z23c, Z24a-Z24c, Z32a-Z32c, Z33a-Z33c, Z34a-Z34c, Z43a-Z43c) drehfest mit einer der Vorgelegewellen (13a-13c, 14a-14c, 15a-15c) zu verbinden,
wobei von der ersten, zweiten, dritten und vierten Zahnradebene (Z1a-Z4a; Z1b-Z4b; Z1c-Z4c) die erste Zahnradebene (Z1a-Z1c) den Lastschaltkupplungen (K1a-K1c, K2a-K2c, K3b) am nächsten liegt, die zweite Zahnradebene (Z2a-Z2c) zur ersten Zahnradebene (Z1a-Z1c) benachbart und die dritte Zahnradebene (Z3a-Z3c) zur zweiten Zahnradebene (Z2a-Z2c) benachbart ist, wobei die zumindest sechs Schalteinheiten (S1a-S6a; S1b-S6b; S1c-S6c) zur Bildung der zumindest sechs Getriebegänge (V1a-V6a; V1c-V6c) ausschließlich zwischen der zweiten und dritten Zahnradebene (Z2a-Z2c, Z3a-Z3c) angeordnet sind, wobei eines (Z13a, Z13b, Z13c) der Losräder der ersten Zahnradebene (Z1a, Z1b, Z1c) und eines (Z23a, Z23b, Z23c) der Losräder der zweiten Zahnradebene (Z2a, Z3a, Z4a) permanent drehfest miteinander verbunden sind und so ein erstes drehfest verbundenes Losradpaar darstellen,
wobei eines (Z33a, Z33b, Z33c) der Losräder der dritten Zahnradebene (Z3a, Z3b, Z3c) und eines (Z43a, Z43b, Z43c) der Losräder der vierten Zahnradebene (Z4a, Z4b, Z4c) permanent drehfest miteinander verbunden sind und so ein zweites drehfest verbundenes Losradpaar darstellen,
wobei das erste drehfest verbundene Losradpaar und das zweite drehfest verbundene Losradpaar auf der zweiten Vorgelegewelle (14a, 14b, 14c) angeordnet sind,
wobei die zweite Zahnradebene (Z2a-Z2c) ein permanent drehfest mit der zweiten Eingangswelle (12a-12c) verbundenes Festrad (Z21a-Z21c) umfasst **dadurch gekennzeichnet, dass**
die dritte Zahnradebene (Z3a-Z3c) ein permanent drehfest mit der ersten Eingangswelle (11a-11c) verbundenes Festrad (Z31a-Z31c) umfasst.

2. Doppelkupplungsgetriebe nach Anspruch 1,
**dadurch gekennzeichnet, dass**
zumindest vier Schalteinheiten (S1a-S6a; S1b-S6b; S1c-S6c) der zumindest sechs Schalteinheiten (S1a-S6a; S1b-S6b; S1c-S6c) zu zumindest zwei Doppelschalteinheiten zusammengefasst ausgebildet sind.

3. Doppelkupplungsgetriebe nach Anspruch 2,
**dadurch gekennzeichnet, dass**
alle Schalteinheiten (S1a-S6a; S1b-S6b; S1c-S6c) zu Doppelschalteinheiten zusammengefasst ausgebildet sind.

4. Doppelkupplungsgetriebe nach einem der vorhergehenden Ansprüche,
**dadurch gekennzeichnet, dass**
eine erste Schalteinheit (S1a-S1c) der Schalteinheiten (S1a-S6a; S1b-S6b; S1c-S6c) dazu vorgesehen ist, ein Losrad (Z32a-Z32c) der Losräder (Z13a-Z13c, Z22a-Z22c, Z23a-Z23c, Z24a-Z24c, Z32a-Z32c, Z33a-Z33c, Z34a-Z34c, Z43a-Z43c) zu einer Bildung eines Getriebegangs (V5a-V5c) mit der ersten Vorgelegewelle (13a-13c) drehfest zu verbinden.

5. Doppelkupplungsgetriebe nach einem der vorhergehenden Ansprüche,
**dadurch gekennzeichnet, dass**
eine zweite Schalteinheit (S2a-S2c) der Schalteinheiten (S1a-S6a; S1b-S6b; S1c-S6c) dazu vorgesehen ist, ein zweites Losrad (Z22a-Z22c) der Losräder (Z13a-Z13c, Z22a-Z22c, Z23a-Z23c, Z24a-Z24c, Z32a-Z32c, Z33a-Z33c, Z34a-Z34c, Z43a-Z43c) zu einer Bildung eines Getriebegangs (V2a-V2c) mit der ersten Vorgelegewelle (13a-13c) drehfest zu verbinden.

6. Doppelkupplungsgetriebe nach Anspruch 2,
**dadurch gekennzeichnet, dass**
die erste Schalteinheit (S1a-S1c) und die zweite Schalteinheit (S2a-S2c) als Doppelschalteinheit zusammengefasst ausgebildet sind.

7. Doppelkupplungsgetriebe nach einem der vorhergehenden Ansprüche,
**gekennzeichnet durch**
zumindest einen Elektromotor (18b), der mit zumindest einem Kupplungselement der Lastschaltkupplungen (K1b, K2b) permanent drehfest verbunden ist.

## Claims

1. Dual-clutch transmission for shifting at least six transmission gears (V1a-V6a; V1c-V6c) that can be shifted sequentially, comprising a first input shaft (11a-11c), which is provided for connection to a first power shift clutch (K1a-K1c), comprising a second input shaft (12a-12c), which is provided for connection to a second power shift clutch (K2a-K2c), comprising a first layshaft (13a-13c), comprising a second layshaft (14a-14c), comprising a third layshaft (15a-15c), comprising at least six shifting units (S1a-S6a; S1b-S6b; S1c-S6c) and comprising at least one first, one second, one third and one fourth gearwheel plane (Z1a-Z4a; Z1b-Z4b; Z1c-Z4c),
wherein the at least six shifting units (S1a-S6a; S1b-S6b; S1c-S6c) are arranged between exactly two immediately adjacent gearwheel planes (Z2a-Z2c, Z3a-Z3c) of the at least four gearwheel planes (Z1a-Z4a; Z1b-Z4b; Z1c-Z4c), wherein the at least six shifting units (Z1a-Z4a; Z1b-Z4b; Z1c-Z4c) are provided for connecting one loose wheel (Z13a-Z13c, Z22a-Z22c, Z23a-Z23c, Z24a-Z24c, Z32a-Z32c, Z33a-Z33c, Z34a-Z34c, Z43a-Z43c) to one of the layshafts (13a-13c, 14a-14c, 15a-15c) for conjoint rotation therewith in each case, wherein, out of the first, second, third and fourth gearwheel plane (Z1a-Z4a; Z1b-Z4b; Z1c-Z4c), the first gearwheel plane (Z1a-Z1c) is closest to the power shift clutches (K1a-K1c, K2a-K2c, K3b), the second gearwheel plane (Z2a-Z2c) is adjacent to the first gearwheel plane (Z1a-Z1c) and the third gearwheel plane (Z3a-Z3c) is adjacent to the second gearwheel plane (Z2a-Z2c), wherein the at least six shifting units (S1a-S6a; S1b-S6b; S1c-S6c) are arranged exclusively between the second and third gearwheel plane (Z2a-Z2c, Z3a-Z3c) so as to form the at least six transmission gears (V1a-V6a; V1c-V6c), wherein one (Z13a, Z13b, Z13c) of the loose wheels of the first gearwheel plane (Z1a, Z1b, Z1c) and one (Z23a, Z23b, Z23c) of the loose wheels of the second gearwheel plane (Z2a, Z3a, Z4a) are permanently interconnected for conjoint rotation with one another and therefore constitute a first loose wheel pair connected for conjoint rotation,
wherein one (Z33a, Z33b, Z33c) of the loose wheels of the third gearwheel plane (Z3a, Z3b, Z3c) and one (Z43a, Z43b, Z43c) of the loose wheels of the fourth gearwheel plane (Z4a, Z4b, Z4c) are permanently interconnected for conjoint rotation with one another and therefore constitute a second loose wheel pair connected for conjoint rotation, wherein the first loose wheel pair connected for conjoint rotation and the second loose wheel pair connected for conjoint rotation are arranged on the second layshaft (14a, 14b, 14c), wherein the second gearwheel plane (Z2a-Z2c) comprises a fixed wheel (Z21a-Z21c) permanently connected to the second input shaft (12a-12c) for conjoint rotation therewith,
**characterised in that**
the third gearwheel plane (Z3a-Z3c) comprises a fixed wheel (Z31a-Z31c) permanently connected to the first input shaft (11a-11c) for conjoint rotation therewith.

2. Dual-clutch transmission according to claim 1, **characterised in that** at least four shifting units (S1a-S6a; S1b-S6b; S1c-S6c) of the at least six shifting units (S1a-S6a; S1b-S6b; S1c-S6c) are combined to form at least two dual shifting units.

3. Dual-clutch transmission according to claim 2, **characterised in that** all shifting units (S1a-S6a; S1b-S6b; S1c-S6c) are combined to form dual shifting units.

4. Dual-clutch transmission according to any of the preceding claims, **characterised in that** a first shifting unit (S1a-S1c) of the shifting units (S1a-S6a; S1b-S6b; S1c-S6c) is provided for connecting one loose wheel (Z32a-Z32c) of the loose wheels (Z13a-Z13c, Z22a-Z22c, Z23a-Z23c, Z24a-Z24c, Z32a-Z32c, Z33a-Z33c, Z34a-Z34c, Z43a-Z43c) to the first layshaft (13a-13c) for conjoint rotation therewith so as to form a transmission gear (V5a-V5c).

5. Dual-clutch transmission according to any of the preceding claims, **characterised in that** a second shifting unit (S2a-S2c) of the shifting units (S1a-S6a; S1b-S6b; S1c-S6c) is provided for connecting a second loose wheel (Z22a-Z22c) of the loose wheels (Z13a-Z13c, Z22a-Z22c, Z23a-Z23c, Z24a-Z24c, Z32a-Z32c, Z33a-Z33c, Z34a-Z34c, Z43a-Z43c) to the first layshaft (13a-13c) for conjoint rotation therewith so as to form a transmission gear (V2a-V2c).

6. Dual-clutch transmission according to claim 2,
**characterised in that**
the first shifting unit (S1a-S1c) and the second shifting unit (S2a-S2c) are combined to form a dual shifting unit.

7. Dual-clutch transmission according to any of the preceding claims, **characterised by** at least one electric motor (18b), which is permanently connected to at least one clutch element of the power shift clutches (K1b, Kb2) for conjoint rotation therewith.

## Revendications

1. Transmission à double embrayage pour le changement d'au moins six vitesses de transmission (V1a à V6a ; V1c à V6c) pouvant être changées séquentiellement, avec un premier arbre d'entrée (11a à 11c) qui est prévu pour la connexion à un premier embrayage avec mode charge lourde (K1a à K1c), avec un second arbre d'entrée (12a à 12c) qui est prévu pour la connexion à un second embrayage avec mode charge lourde (K2a à K2c), avec un premier arbre de transmission (13a à 13c), avec un deuxième arbre de transmission (14a à 14c), avec un troisième arbre de transmission (15a à 15c), avec au moins six unités de commutation (S1a à S6a ; S1b à S6b ; S1c à S6c) et avec au moins un premier, un deuxième, un troisième et un quatrième plan de roue dentée (Z1a à Z4a ; Z1b à Z4b ; Z1c à Z4c),
dans laquelle les au moins six unités de commutation (S1a à S6a ; S1b à S6b ; S1c à S6c) sont disposées entre exactement deux plans de roue dentée directement voisins (Z2a à Z2c, Z3a à Z3c) des au moins quatre plans de roue dentée (Z1a à Z4a ; Z1b à Z4b ; Z1c à Z4c), dans laquelle les au moins six unités de commutation (Z1a à Z4a ; Z1b à Z4b ; Z1c à Z4c) sont prévues pour connecter à chaque fois une roue libre (Z13a à Z13c, Z22a à Z22c, Z23a à Z23c, Z24a à Z24c, Z32a à Z32c, Z33a à Z33c, Z34a à Z34c, Z43a à Z43c) de manière fixe en rotation à un des arbres de transmission (13a à 13c, 14a à 14c, 15a à 15c),
dans laquelle parmi les premier, deuxième, troisième et quatrième plans de roue dentée (Z1a à Z4a ; Z1b à Z4b ; Z1c à Z4c), le premier plan de roue dentée (Z1a à Z1c) se situe le plus proche des embrayages avec mode charge lourde (K1a à K1c, K2a à K2c, K3b), le deuxième plan de roue dentée (Z2a à Z2c) est voisin du premier plan de roue dentée (Z1a à Z1c) et le troisième plan de roue dentée (Z3a à Z3c) est voisin du deuxième plan de roue dentée (Z2a à Z2c), dans laquelle les au moins six unités de commutation (S1a à S6a ; S1b à S6b ; S1c à S6c) sont disposées exclusivement entre les deuxième et troisième plans de roue dentée (Z2a à Z2c, Z3a à Z3c) pour la formation des au moins six vitesses de transmission (V1a à V6a ; V1c à V6c), dans laquelle une (Z13a, Z13b, Z13c) des roues libres du premier plan de roue dentée (Z1a, Z1b, Z1c) et une (Z23a, Z23b, Z23c) des roues libres du deuxième plan de roue dentée (Z2a, Z3a, Z4a) sont connectées l'une à l'autre de manière permanente fixe en rotation et représentent ainsi une première paire de roues libres connectées de manière fixe en rotation,
dans laquelle une (Z33a, Z33b, Z33c) des roues libres du troisième plan de roue dentée (Z3a, Z3b, Z3c) et une (Z43a, Z43b, Z43c) des roues libres du quatrième plan de roue dentée (Z4a, Z4b, Z4c) sont connectées l'une à l'autre de manière permanente fixe en rotation et représentent ainsi une seconde paire de roues libres connectées de manière fixe en rotation,
dans laquelle la première paire de roues libres connectées de manière fixe en rotation et la seconde paire de roues libres connectées de manière fixe en rotation sont disposées sur le deuxième arbre de transmission (14a, 14b, 14c), dans laquelle le deuxième plan de roue dentée (Z2a à Z2c) comprend une roue fixe (Z21a à Z21c) connectée de manière permanente fixe en rotation au second arbre d'entrée (12a à 12c),
**caractérisée en ce que**
le troisième plan de roue dentée (Z3a à Z3c) comprend une roue fixe (Z31a à Z31c) connectée de manière permanente fixe en rotation au premier arbre d'entrée (11a à 11c).

2. Transmission à double embrayage selon la revendication 1,
**caractérisée en ce que**
au moins quatre unités de commutation (S1a à S6a ; S1b à S6b ; S1c à S6c) des au moins six unités de commutation (S1a à S6a ; S1b à S6b ; S1c à S6c) sont réalisées de manière réunie en au moins deux unités de commutation doubles.

3. Transmission à double embrayage selon la revendication 2,
**caractérisée en ce que**
toutes les unités de commutation (S1a à S6a ; S1b à S6b ; S1c à S6c) sont réalisées de manière réunie en unités de commutation doubles.

4. Transmission à double embrayage selon une des revendications précédentes,
**caractérisée en ce que**
une première unité de commutation (S1a à S1c) des unités de commutation (S1a à S6a ; S1b à S6b ; S1c à S6c) est prévue pour connecter de manière fixe en rotation une roue libre (Z32a à Z32c) des roues libres (Z13a à Z13c, Z22a à Z22c, Z23a à Z23c, Z24a à Z24c, Z32a à Z32c, Z33a à Z33c, Z34a à Z34c, Z43a à Z43c) au premier arbre de transmission (13a à 13c) pour une formation d'une vitesse de transmission (V5a à V5c).

5. Transmission à double embrayage selon une des revendications précédentes,
**caractérisée en ce que**
une deuxième unité de commutation (S2a à S2c) des unités de commutation (S1a à S6a ; S1b à S6b ; S1c à S6c) est prévue pour connecter de manière fixe en rotation une deuxième roue libre (Z22a à Z22c) des roues libres (Z13a à Z13c, Z22a à Z22c, Z23a à Z23c, Z24a à Z24c, Z32a à Z32c, Z33a à Z33c, Z34a à Z34c, Z43a à Z43c) au premier arbre de transmission (13a à 13c) pour une formation d'une vitesse de transmission (V2a à V2c).

6. Transmission à double embrayage selon la revendication 2,
**caractérisée en ce que**
la première unité de commutation (S1a à S1c) et la deuxième unité de commutation (S2a à S2c) sont réalisées de manière réunie en tant qu'unité de commutation double.

7. Transmission à double embrayage selon une des revendications précédentes,
**caractérisée par**
au moins un moteur électrique (18b) qui est connecté de manière permanente fixe en rotation à au moins un élément d'embrayage des embrayages avec mode charge lourde (K1b, K2b).
